# EUROPÄISCHE PATENTANMELDUNG

(11) **EP 1 191 711 A2**
(43) Veröffentlichungstag der Anmeldung: **27.03.2002**
(21) Anmeldenummer: 01122116.5
(22) Anmeldetag: 14.09.2001
(51) Int. Cl.: H04B 7/26

(54) **Verfahren zur Taktsynchronisierung in einem DECT-Netz**

(30) Priorität: 26.09.2000 DE 10047654
(71) Anmelder: SIEMENS AKTIENGESELLSCHAFT, 80333 München (DE)
(72) Erfinder: Heitmann, Jürgen, Dr., 82061 Neuried (DE)

(57) **Zusammenfassung**

Verfahren zur Taktsynchronisierung zwischen einem ersten und einem zweiten Vermittlungssystemteil (VST1, VST2) zugeordneten Basisstationen (BS1.1 bis BS2.3) eines Mobilfunknetzes, insbesondere nach dem DECT-Standard für eine Seamless-Handover-Prozedur, bei der jedes Vermittlungssystemteil den zugeordneten Basisstationen eine Information zum Beginn eines Funkrahmens übermittelt, wobei die Taktsynchronisierung ohne leitungsgebundenen Übertragungsweg ausschließlich über die Luftschnittstelle erfolgt.

## Beschreibung

Die Erfindung betrifft ein Verfahren zur Taktsynchronisierung in einem Mobilfunknetz für eine Seamless-Handover-Prozedur nach dem Oberbegriff des Anspruchs 1 sowie eine entsprechende Ausgestaltung eines Mobilfunknetzes.

Die mobile Telekommunikation ist binnen weniger Jahre in den entwickelten Industrieländern zu einem praktisch unverzichtbaren Element des Geschäfts- und Privatlebens geworden. Hierbei haben sich die nach dem GSM-Standard arbeitenden Mobilfunknetze eine marktbeherrschende Stellung gesichert. Andere Systeme haben längst nicht deren Bedeutung erlangen können. Dazu gehört auch der DECT(Digital Enhanced Cordless Telecommunication)-Standard, der Anfang der 90er Jahre durch das ETSI als weltweiter Standard für schnurlose Telefonie festgelegt wurde.

Ein DECT-Netz ist ein mikrozellulares, digitales Mobilfunknetz, welches sich besonders für hohe Teilnehmerdichten eignet und in erster Linie für den Einsatz in Gebäuden konzipiert, jedoch auch im Freien einsetzbar ist. Sein derzeitiges Haupteinsatzgebiet sind Schnurlostelefone im privaten Einsatzbereich.

Mit DECT-Systemen lassen sich aber auch komplette schnurlose Nebenstellenanlagen für Firmen, Behörden, Organisationen o. ä. aufbauen. Wie beim privaten Schnurlostelefon auch, sind neben Gesprächen über den Amtsanschluß auch solche zwischen den einzelnen Mobilteilen über die DECT-Basisstation möglich. Von großem Vorteil ist, daß ein Mitarbeiter einer mit einem DECT-System ausgerüsteten Einrichtung auch bei Verlassen seines Arbeitsplatzes oder bei einem Umzug innerhalb der Firma ständig erreichbar bleibt. Bei Umzügen sind hardwareseitig keine Veränderungen an der Telekommunikationsanlage der Einrichtung erforderlich, sondern allenfalls an einem Auswertungstool.

Größere Einrichtungen sind mit mehreren Basisstationen ausgerüstet, die verschiedene Zellen bilden. In diesen kann sich der Teilnehmer frei bewegen, wobei das Weiterreichen eines laufenden Gespräches von einer Funkzelle in die nächste unterbrechungsfrei erfolgen kann (Seamless Handover). Insofern sind also Leistungsmerkmale realisierbar, die denen der GSM-Netze sehr nahe kommen - allerdings mit dem großen Vorteil, daß die Realisierung eines firmeninternen DECT-Systems ohne Erwerb von GSM-Lizenzen oder -Unterlizenzen möglich ist. Dies eröffnet dem DECT-Standard auch aktuell günstige Perspektiven gegenüber bereits konzipierten Corporate-GSM-Lösungen. In diesem Zusammenhang ist auch von Vorteil, daß DECT-Endgeräte etwas einfacher aufgebaut und daher kostengünstiger als GSM-Endgeräte sind.

Ein spezifisches Problem von DECT-Systemen stellen die hohen Anforderungen dar, die für den Seamless Handover an die Synchronisation der beteiligten Basisstationen zu stellen sind. Benachbarte Basisstationen müssen für eine einwandfreie Seamless-Handover-Prozedur zunächst eine Frequenzgenauigkeit von mindestens ± 5 ppm einhalten. Zudem müssen sie ihren jeweiligen Funkrahmen (10 ms) sowie die Überrahmen (600 ms und 800 ms) synchron zueinander halten. Die Abweichung der 10 ms-Funkrahmen voneinander darf maximal ± 2 µs betragen.

Hierzu müssen die Basisstationen sich auf einen Takt synchronisieren, der vom übergeordneten Vermittlungssystemteil mit ausreichender Genauigkeit und Stabilität geliefert wird. Der Beginn des Funkrahmens muß jeder Basisstation so mitgeteilt werden, daß eine Gleichlage benachbarter Basisstationen gewährleistet ist. Es ist - etwa aus der EP 0 560 079 B1 - bekannt, die Synchronität zwischen verschiedenen Basisstationen innerhalb eines Vermittlungsbereiches in befriedigender Weise herzustellen.

Die genannte Druckschrift lehrt dazu, daß mehrere Basisstationen mindestens ein übermitteltes Synchronisationssignal zur Gewinnung verschiedener Abschätzungen des Synchronisa-tionsfehlers empfangen und auswerten und zur Verringerung des Synchronisationsfehlers ein bestimmtes Einstellregime befolgt wird.

Bei verteilten Systemen, die mehrere Vermittlungssystemteile aufweisen, müssen diese selbst synchron zueinander sein. Für an verschiedene Vermittlungssystemteile angeschlossene Basisstationen ist eine konstante Phasenablage zu ermitteln und auszuregeln, was eine hohe Systemfrequenzübereinstimmung zwischen den Vermittlungssystemteilen voraussetzt. Nur dann ist es möglich, vom Vorliegen einer quasi-konstanten Phasendifferenz der benachbarten Vermittlungssystemteile auszugehen und diese unter Berücksichtigung der Laufzeit den einzelnen Basisstationen so mitzuteilen, daß diese ihre Funkrahmen mit der erforderlichen Genauigkeit von ± 2 µs zueinander einstellen können. Da üblicherweise eine Phasenmessung und Nachregelung nur alle 80 s stattfinden und dabei jeweils nur ein Regelschritt von ca. 800 ns vollzogen werden kann, müssen die Vermittlungssystemteile in Bezug aufeinander eine Frequenzübereinstimmung von mindestens 1 x 10⁻⁸ haben.

Es ist bekannt, die Synchronität mehrerer Vermittlungssystemteile über digitale takttransparente drahtgebundene Übertragungswege zwischen den Systemteilen zu gewährleisten. Eine weitere Lösung besteht darin, jedem Vermittlungssystemteil von außen eine hochgenaue Frequenz- und Zeitinformation über einen GPS-Empfänger zuzuführen. Während die erstgenannte bekannte Lösung einen hohen Installationsaufwand erfordert und daher relativ unflexibel ist, erfordert die zweite Lösung einen hohen Kostenaufwand.

Der Erfindung liegt die Aufgabe zugrunde, ein verbessertes, weitgehend universelles Verfahren der gattungsgemäßen Art sowie ein entsprechendes Mobilfunknetz, insbesondere nach dem DECT-Standard, anzugeben.

Diese Aufgabe wird hinsichtlich ihres Verfahrensaspektes durch ein Verfahren mit den Merkmalen des Anspruchs 1 und hinsichtlich ihres Netzaspektes durch ein Mobilfunknetz mit den Merkmalen des Anspruchs 7 gelöst.

Die Erfindung schließt den wesentlichen Gedanken ein, auf eine leitungsgebundene Übertragung von Synchronisationsinformation zwischen verschiedenen Vermittlungssystemteilen gänzlich zu verzichten und hierfür ausschließlich die Luftschnittstelle zu nutzen. Dies ermöglicht die Realisierung von DECT-Systemen mit einem Seamless-Handover zwischen Basisstationen, die verschiedenen Vermittlungssystemteilen zugeordnet sind, ohne daß diese digitale takttransparente drahtgebundene Übertragungswege untereinander besitzen.

In einer bevorzugten Ausführung der vorgeschlagenen Lösung, die sich gegenüber der oben erwähnten GPS-Synchronisierung insbesondere durch erhebliche Kostenvorteile auszeichnet, wird jeweils eine Basisstation eines Systemteils räumlich so nah bei einer Basisstation eines anderes Systemteils installiert, daß beide unter allen praktisch relevanten Betriebsbedingungen das Signal der jeweils anderen Basisstation empfangen können. Man spricht hier von einer "Luftsynchronisation" zwischen den Basisstationen. Eine der Basisstationen wird auch dazu eingesetzt, die Phasendifferenz ihres Funkrahmens gegenüber demjenigen der anderen Basisstation zu messen und das Phasendifferenz-Meßergebnis dem eigenen Vermittlungssys-temteil zur Auswertung zu übermitteln. In diesem wird hieraus eine Nachregelinformation für alle dem Vermittlungssystemteil zugeordneten Basisstationen errechnet und wiederum an diese übertragen.

Ein wesentlicher neuer Gedanke besteht nun darin, die Messungen der Phasendifferenz zu exakt vorbestimmten Zeitpunkten oder zeitlich exakt äquidistant auszuführen und aus der jeweils gemessenen Phasendifferenz und der Lage des Meßpunktes auf der Zeitskala eine momentane Frequenzdifferenz zwischen den Taktgeneratoren der beiden in Rede stehenden Vermittlungssystemteile zu ermitteln und diese zur verbesserten Synchronisation der Vermittlungssystemteile zu nutzen.

Eine wesentliche Verbesserung wird hier insofern erreicht, als die Taktgeneratoren als Lieferanten der Zeit-Frequenzbasis für die einem Vermittlungssystemteil zugeordneten Basisstationen möglichst exakt synchron zueinander sein müssen und die gemäß dem Stand der Technik nur bedingt gültige Annahme einer quasi-konstanten Phasendifferenz durch die Gewißheit einer zeitlich tatsächlich konstanten Phasendifferenz ersetzt werden kann. Die vorgeschlagene Lösung bildet somit DECT-Luftschnittstellen im Sinne von "referenztaktliefernden" Schnittstellen weiter, wobei jedoch nicht wirklich ein Referenztakt, sondern ein Meßergebnis als Grundlage für eine Takt-Nachregelung geliefert wird.

Infolge der Verflechtung der Synchronisationsvorgänge über verschiedene Basisstationen verschiedener Systemteile müssen Vorkehrungen gegen das Auftreten von Synchronisationsschleifen auch bei Ausfall einzelner Basisstationen getroffen werden. Hierzu wird in einer zweckmäßigen Ausführung der Erfindung ein geeignet gestalteter Netzsynchronisationsplan erstellt und in einer entsprechenden Datenbasis des DECT-System gespeichert. Zu diesem Aspekt wird im einzelnen auf die EP 0 530 393 der Anmelderin verwiesen.

Wegen der anfangs möglichen großen Frequenzdifferenz gemäß dem DECT-Standard muß entweder eine Anfangs-Synchronisation über ein Zeitprotokoll gemäß der unveröffentlichten Voranmeldung der Anmelderin mit dem amtlichen Aktenzeichen 19943779.3 des Deutschen Patent- und Markenamts erfolgen, oder die Phasendifferenzmessungen müssen anfangs sehr häufig - bevorzugt in zeitlichen Abständen im Bereich zwischen 0,1 und 10 s, insbesondere im Sekundentakt - erfolgen, damit eine Frequenzdifferenz von weniger als 1 ppm für den normalen Betriebsablauf erreicht werden kann. Nach Erreichen dieses Schwellwertes kann die weitere Frequenz-Feinabstimmung aufgrund von Phasenmessungen mit einem herkömmlichen Zeitabstand von 80 s erfolgen.

Die Regelung ist nicht mehr mit einem einfachen PLL (Phase-Locked-Loop) möglich, sondern muß eine Frequenzregelung und den Einsatz eines zweiten Phasen-Regelkreises gemäß der unveröffentlichten Voranmeldung der Anmelderin mit dem amtlichen Aktenzeichen 19946502.9 des Deutschen Patent- und Markenamts einschließen, um eine wirtschaftlich vertretbare Lösung mit einem frequenzstabilen TCXO und einem VCXO zu realisieren. Aufgrund der langen erforderlichen Zeitkonstanten werden die Regelalgorithmen vorzugsweise in Software ausgeführt.

Das vorgeschlagene Mobilfunknetz weist vorrichtungsseitig Merkmale auf, die weitgehend zu den oben beschriebenen Verfahrensmerkmalen korrespondieren, zumal sowohl die Realisierung des Verfahrens als auch des Netzaufbaus in einer Verknüpfung von Hard- und Softwareaspekten erfolgen. Besonders hinzuweisen ist auf das Vorsehen eines Zeitgebers zur exakten Steuerung der Zeitpunkte der Phasendifferenzmessungen und das Vorsehen einer Berechnungseinrichtung zur Berechnung der Frequenzdifferenz der Taktgeneratoren aus den Phasendifferenz-Meßwerten und den Meßzeitpunkten.

Hinsichtlich bevorzugter Ausführungen ist auf die Bereitstellung von Speichern oder Speicherbereichen in der Betriebsprogramm-Datenbasis des DECT-Systems bzw. bei dem Vermittlungssystemteil zur Speicherung eines Zeitprotokolls bzw. Zeitregimes für die Phasendifferenzmessungen bei der Anfgangs-Synchronisierung bzw. zur Speicherung des erwähnten Netzsynchronisationsplanes hinzuweisen.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Fig. 1 eine schematische Darstellung eines Ausschnittes aus einem DECT-System mit mehreren Vermittlungssystemteilen und
Fig. 2 eine grafische Darstellung zur Verdeutlichung der Ermittlung der Phasenablage zwischen Basisstationen, die an verschiedene Vermittlungssystemteile angeschlossen sind.

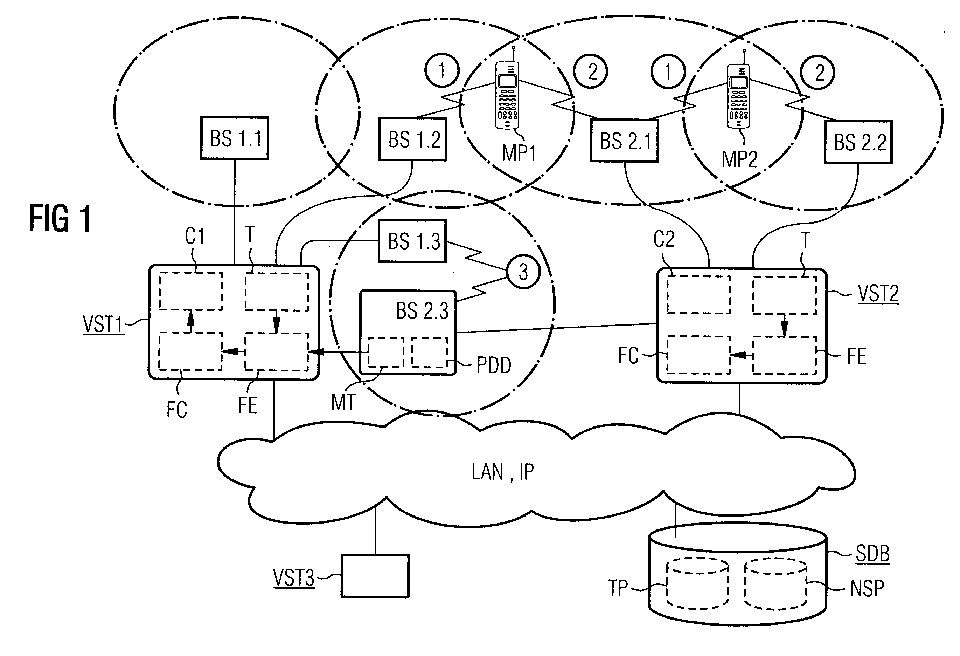

Fig. 1 zeigt skizzenartig einen Ausschnitt aus einem DECT-Netz mit drei über ein lokales Netz LAN oder ein IP-Netz IP mit entsprechenden Schnittstellen miteinander verbundenen Vermittlungssystemteile VST1, VST2 und VST3. Die (nicht separat dargestellten) Schnittstellen sind nicht dazu ausgebildet, eine Netzsynchronisation zu gewährleisten.

Den Vermittlungssystemteilen VST1 und VST2 sind in der Figur jeweils drei Basisstationen BS1.1, BS1.2 und BS1.3 bzw. BS2.1, BS2.2 und BS2.3 zugeordnet. Mit den in Kreise gesetzten Ziffern 1 und 2 sind jeweils Seamless-Handover-Prozeduren zwischen den Basisstationen BS1.2 und BS2.1 bzw. BS2.1 und BS2.2 für ein erstes Endgerät (Mobile Part) MP1 bzw. ein zweites Endgerät MP2 bezeichnet. Die ebenfalls in einen Kreis gesetzte Ziffer 3 bezeichnet das Bestehen einer Funkmeßverbindung zur Phasendifferenzmessung zwischen den - räumlich eng benachbart zueinander angeordneten - Basisstationen BS1.3 des Vermittlungssystemteils VST1 und BS2.3 des Vermittlungssystemteils VST2.

Die Vermittlungssystemteile haben - was in der Figur nur symbolartig für die Vermittlungssystemteile VST1 und VST2 angedeutet ist - jeweils eine hochpräzise Zeitbasis T, einen Taktgenerator CG und diesem zugeordnete Frequenzeinstellmittel FC, denen eingangsseitig eine Frequenzdifferenz-Berechnungseinheit FE zugeordnet ist. Am Beispiel der Basisstation BS2.3 ist skizziert, daß die einander räumlich benachbart angeordneten Basisstationen jeweils eine Phasendifferenz-Meßeinrichtung PDD und eine Meßwert-Sendeeinrichtung MT zur Übermittlung eines gewonnenen Meßwertes an das zugehörige Vermittlungssystemteil aufweisen. Eine bei den Vermittlungssystemteilen vorzusehende Sendeeinrichtung zur Übertragung einer Phasen-Nachregelinformation an die zugeordneten Basisstationen ist in der Figur hingehen nicht dargestellt.

Über das lokale Netz LAN bzw. IP-Netz IP ist mit den Vermittlungssystemteilen eine System-Datenbasis SDB verbunden, in der - neben einer Vielzahl anderer, im Kontext der Erfindung weniger wichtiger Datensätze - insbesondere ein Netzsynchronisationsplan NSP und ein Zeitprotokoll TP für die Anfangs-Synchronisierung gespeichert sind, gemäß denen die Synchronisationsvorgänge zwischen den Vermittlungssystemteilen und den zugeordneten Basisstationen ausgeführt werden.

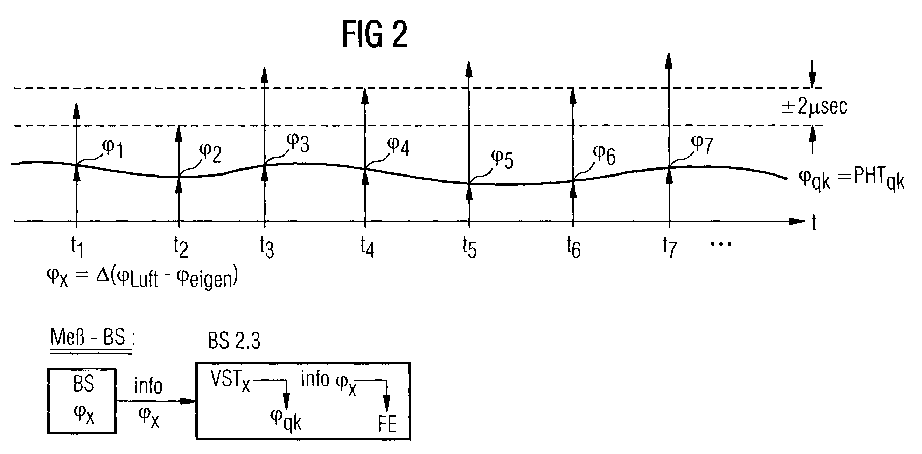

Der Ablauf der einzelnen Synchronisationsvorgänge wurde weiter oben bereits beschrieben und soll daher hier nicht wiederholt werden. Unter Hinweis auf Fig. 2 wird noch angemerkt, daß - wie oben bereits grundsätzlich ausgeführt - zu exakt äquidistanten Zeitpunkten t1 ... t7 jeweils ein Phasendifferenzwert ϕ1 ... ϕ7 gewonnen wird, wobei als Meß-Basisstation gemäß Fig. 1 die Basisstation BS2.3 dient, die das Phasendifferenz-Meßergebnis dem Vermittlungssystemteil VST1 und zwar speziell der Frequenzdifferenzberechnungsstufe FE, zuführt.

Die Ausführung der Erfindung ist nicht auf dieses Beispiel sowie die oben speziell erwähnten Aspekte beschränkt, sondern im Rahmen der Ansprüche ebenso in einer Vielzahl von Abwandlungen möglich, die im Rahmen fachgemäßen Handelns liegen.

Bezugszeichenliste
- BS1.1, BS1.2, BS1.3, BS2.1, BS2.2, BS2.3: Basisstation
- C1, C2: Taktgenerator
- FC: Frequenzsteuerstufe
- FE: Frequenzdifferenz-Berechnungseinheit
- IP: IP-Netz
- LAN: lokales Netz
- MP1, MP2: Endgerät
- MT: Meßergebnis-Sendestufe
- PDD: Phasendifferenz-Meßeinrichtung
- SDB: Systemdatenbasis
- T: Zeitgeber
- TP: Zeitprotokoll
- VST1, VST2, VST3: Vermittlungssystemteil
- ① - ② ③ Funkmeßstrecke: Seamless Handover

## Patentansprüche

1. Verfahren zur Taktsynchronisierung zwischen einem ersten und einem zweiten Vermittlungssystemteil (VST1, VST2) zugeordneten Basisstationen (BS1.1 bis BS2.3) eines Mobilfunknetzes, insbesondere nach dem DECT-Standard für eine Seamless-Handover-Prozedur, bei der jedes Vermittlungssystemteil den zugeordneten Basisstationen eine Information zum Beginn eines Funkrahmens übermittelt,
**dadurch gekennzeichnet, daß**
die Taktsynchronisierung ohne leitungsgebundenen Übertragungsweg ausschließlich über die Luftschnittstelle erfolgt.

2. Verfahren nach Anspruch 1,
**dadurch gekennzeichnet, daß**
eine dem ersten Vermittlungssystemteil (VST1) zugeordnete erste Basisstation (BS1.3) und eine dem zweiten Vermittlungssystemteil (VST2) zugeordnete zweite Basisstation (BS2.3) derart benachbart positioniert sind, daß die zweite Basisstation unter allen Betriebsbedingungen über die Luftschnittstelle das Signal der ersten Basisstation empfängt,
in der zweiten Basisstation zu exakt vorbestimmten oder äquidistanten Zeitpunkten jeweils eine Phasendifferenz des eigenen Funkrahmens gegenüber demjenigen der ersten Basisstation gemessen wird,
die Phasendifferenz-Meßergebnisse an das zweite Vermittlungssystemteil übermittelt werden und
im zweiten Vermittlungssystemteil hieraus eine Phasen-Nachregelinformation für alle ihm zugeordneten Basisstationen bestimmt wird,
wobei aus der jeweiligen Phasendifferenz und der zeitlichen Lage eines Meßpunktes eine momentane Frequenzdifferenz eines zweiten Taktgenerators (C2) des zweiten Vermittlungssystemteils (VST2) gegenüber einem ersten Taktgenerator (C1) des ersten Vermittlungssystemteils (VST1) übermittelt und zur Synchronisation des zweiten Taktgenerators auf den ersten Taktgenerator benutzt wird.

3. Verfahren nach einem der vorangehenden Ansprüche, insbesondere nach Anspruch 2,
**dadurch gekennzeichnet, daß**
die Phasendifferenzmessungen in einer Anfangs-Betriebsphase in wesentlich kürzeren Zeitabständen als im eingelaufenen Betrieb durchgeführt werden, bevorzugt im Bereich zwischen 0,1 und 10 s, insbesondere im Sekundentakt.

4. Verfahren nach einem der vorangehenden Ansprüche,
**dadurch gekennzeichnet, daß**
die Taktsynchronisierung in einer Anfangs-Betriebsphase aufgrund eines vorbestimmten Zeitprotokolls durchgeführt wird.

5. Verfahren nach einem der vorangehenden Ansprüche,
**gekennzeichnet durch**
eine Frequenzregelung sowie die Nutzung eines ersten und zweiten Phasenregelkreises.

6. Verfahren nach einem der vorangehenden Ansprüche,
**dadurch gekennzeichnet, daß**
die Taktsynchronisierung eines gesamten Mobilfunknetzes mit einer ersten Mehrzahl von Vermittlungsstationen und einer zweiten Mehrzahl von Basisstationen aufgrund eines vorbestimmten Netzsynchronisationsplanes (NSP) derart ausgeführt wird, daß bei Ausfall einzelner Basisstationen die Ausbildung von Synchronisationsschleifen sicher unterbunden wird.

7. Mobilfunknetz, insbesondere nach dem DECT-Standard, mit einem ersten Vermittlungssystemteil (VST1), dem erste Basisstationen (BS1.1 bis BS1.3) zugeordnet sind, und einem zweiten Vermittlungssystemteil (VST2), dem zweite Basisstationen (BS2.1 bis BS2.3) zugeordnet sind,
**dadurch gekennzeichnet, daß**
zur Sicherstellung eines Seamless-Handover eine dem ersten Vermittlungssystemteil (VST1) zugeordnete erste Basisstation (BS1.3) und eine dem zweiten Vermittlungssystemteil (VST2) zugeordnete zweite Basisstation (BS2.3) derart benachbart positioniert sind, daß die zweite Basisstation unter allen Betriebsbedingungen über die Luftschnittstelle das Signal der ersten Basisstation empfängt die zweite Basisstation (BS2.3) eine Meßeinrichtung (PDD) zur Messung der Phasendifferenz des eigenen Funkrahmens gegenüber demjenigen der ersten Basisstation und
eine Sendeeinrichtung (MT) zur Übermittlung der Phasendifferenz-Meßergebnisse an das zweite Vermittlungssystemteil aufweist,
die zweite Basisstation oder das zweite Vermittlungssystemteil einen Zeitgeber (T) zur Steuerung der Ausführung der Phasendifferenzmessungen zu exakt vorbestimmten oder äquidistanten Zeitpunkten aufweist und daß das zweite Vermittlungssystemteil (VST2) eine Berechnungseinrichtung (FE) zur Berechnung einer Frequenzdifferenz aus den Phasendifferenz-Meßwerten und dem jeweiligen Meßzeitpunkt,
einen Taktgenerator (C2) mit Frequenzeinstellmitteln (FC), die eingangsseitig mit der Berechnungseinrichtung verbunden sind, zum Frequenzabgleich auf die Frequenz eines Taktgenerators des ersten Vermittlungssystemteils und eine Sendeeinrichtung zur Übertragung einer Phasen-Nachregelinformation an zugeordnete Basisstationen aufweist.

8. Mobilfunknetz nach Anspruch 7,
**dadurch gekennzeichnet, daß**
in einer Betriebsprogramm-Datenbasis (SDB) ein Zeitprotokoll (TP) bzw. ein Zeitregime der Phasendifferenzmessungen für die Anfangs-Synchronisierung gespeichert ist.

9. Mobilfunknetz nach Anspruch 7 oder 8,
**dadurch gekennzeichnet, daß**
die Vermittlungssystemteile (VST1 bis VST3) jeweils eine Frequenzregeleinrichtung (FC) und einen ersten und zweiten Phasenregelkreis aufweisen.

10. Mobilfunknetz nach einem der Ansprüche 7 bis 9, insbesondere Anspruch 9,
**dadurch gekennzeichnet, daß**
in den Vermittlungssystemteilen (VST1 bis VST3) ein Regelalgorithmus zur Ausführung der Phasen- und Frequenzregelung softwaremäßig implementiert ist.

11. Mobilfunknetz nach einem der Ansprüche 7 bis 10, insbesondere einem der Ansprüche 8 bis 10,
**dadurch gekennzeichnet, daß**
in der Betriebsprogramm-Datenbasis (SDB) ein Netzsynchronisationsplan (NSP) gespeichert ist, welcher derart aufgebaut ist, daß bei Ausfall einzelner Basisstationen die Ausbildung von Synchronisationsschleifen sicher unterbunden wird.
